# EUROPEAN PATENT SPECIFICATION

(11) **EP 3 957 270 B1**
(45) Date of publication and mention of the grant of the patent: **09.10.2024**
(21) Application number: 20791774.1
(22) Date of filing: 17.04.2020
(51) Int. Cl.: A61C 15/04

(54) **ORAL HYGIENE DEVICE**
MUNDPFLEGEVORRICHTUNG
DISPOSITIF D'HYGIÈNE BUCCALE

(30) Priority: 18.04.2019 ES 201930628 U; 29.08.2019 ES 201931421 U; 15.04.2020 ES 202030644 U
(43) Date of publication of application: 23.02.2022
(73) Proprietor: Giro Teixido, Andres, 3813 Schifflange (LU)
(72) Inventor: Giro Teixido, Andres, 3813 Schifflange (LU)
(74) Representative: Isern Patentes y Marcas S.L.
(86) International application number: PCT/ES2020/070247
(87) International publication number: WO 2020/212639

(56) References cited:
- WO-A1-2015/197616
- BE-A- 526 186
- US-A- 4 585 416
- US-A- 5 213 428
- US-A- 6 116 252
- US-A- 893 345
- US-A1- 2005 076 933
- US-A1- 2013 061 864
- US-A1- 2015 265 383
- US-A1- 2019 083 214

## Description

### OBJECT OF THE INVENTION

The object of the present application is to provide an oral hygiene device.

More specifically, the invention proposes the development of a device for oral hygiene and, more specifically, for interdental hygiene, being based on cleaning with dental floss, which is not provided with any region forming a handle or the like since it does not require the use of hands during its use.

### BACKGROUND OF THE INVENTION

As is known by experts in dental and/or oral hygiene, one of the best methods for dental hygiene is the use of interdental floss, since it enables any food remaining in the areas located between the teeth to be correctly removed in a simple, suitable way, preventing the formation of plaque or tartar, and therefore its consequences, in a much more effective manner.

In order to make it easier for the user to use the dental floss, so-called floss picks are known in the state of the art, essentially based on a rigid part, usually made of a plastic material, in the shape of an arch with a portion of taut dental floss between the two ends of said arch, making it much easier to place the floss between the teeth, especially in the innermost part of the mouth, rather than holding the floss with the hands at two ends to keep it taut.

However, as with the use of a toothbrush, it requires the use of the user's hands, so that the user can only carry out the activity related to dental hygiene, essentially due to the fact that they need the help of at least one of their hands to perform such activity. This fact necessarily limits the execution of the activity, be it the physical place, as well as the moment in time, since it cannot be carried at any moment due to the need to use the hands.

Moreover, all devices based on the use of dental floss are usually made of a polymer material, which is in no case edible, such that the user must be careful not to swallow it. Furthermore, it must subsequently be discarded, which forces the user to find a place to dispose of it or to keep it until they find a place to do so, with the drawback that it requires a space or support case for storing it until it is discarded.

Furthermore, the applicant is currently unaware of the existence of an invention having all the features described herein.

It is known from prior art document no. US 893345 which shows a a hygiene device consisting of a head to support a dental floss and a handle configured to be fixed in the head in use. In addition, documents US 2005/076933 and US 5213428 disclose other examples of a oral hygiene device which form part of the prior art.

Also, BE 526 186 A discloses a toothbrush which include a dental floss situated on the bristles portion.

Document US 6116252 discloses a finger-mounted disposable toothbrush provided with a handle portion to be used by user.

### DESCRIPTION OF THE INVENTION

The present invention has been developed for the purpose of providing an oral hygiene device configured as a novelty in the field of the application and resolves the aforementioned drawbacks, also providing other additional advantages that will be evident from the accompanying description below.

The invention is defined by an oral hygiene device with the features of claim 1. Preferred embodiments of the invention are defined in the dependent claims.

A device for dental hygiene based on cleaning with dental floss has been developed which can be used without the need to use hands, making it much more practical than the devices currently used for dental hygiene, which must necessarily be used with the help of at least one hand. Thus, the user can "play" inside the mouth with this device, moving it around the inside with the help of the tongue and muscular movements of the facial region. This fact advantageously allows the user to simultaneously perform a dental cleaning task and any other additional task, such as, for example, using or handling an electronic device, driving a vehicle, such that the advantages that this new device entails compared to traditional cleaning systems are evident.

Another equally advantageous aspect is the fact that, thanks to the small size thereof, it can be easily stored in a garment pocket, purse or bag, and it can be used multiple times after it is cleaned.

According to another feature of the invention, the main body can be formed from a core made of edible gum (which can contain an active ingredient), the core being coated with a hard thin layer of edible material.

In this way, because it is made of edible material, the user facilitates the use to the user since it is not necessary to remove it from the mouth once it has performed its function, given that the support will gradually dissolve inside the mouth as it is being used. The rigid outermost surrounding layer enables the usage time of the support to increase since otherwise the action of the dental floss would be difficult.

According to another aspect of the oral hygiene device, at least one of the two support regions includes a releasable coupling system envisaged to keep the dental floss fixed in a condition of use and envisaged to remove the dental floss from the support region. Due to these features, the user has the option of replacing the dental floss without having to discard the main body that makes up the device, which enables the useful life thereof to be extended.

In a preferred embodiment, the aforementioned releasable coupling system has a groove made in the top of the support region, the groove having a width such that the dental floss is press-fit, the ends of the floss including a widened portion. In this way, it is a system that is easy to manufacture for the manufacturer and easy to use for the user.

Alternatively, the releasable coupling system may have a plurality of grooves arranged in a cross shape made in an extension that projects from the top of the support region.

According to the invention, the two support regions are provided with a releasable coupling system.

According to the invention, the main body includes a pair of through holes. In this way, the amount of material needed to manufacture the main body can be reduced, and on the other hand, it acts as a safety means for the user in case they swallow it, since it prevents said user from choking due to the lack of air supply.

According to another aspect of the invention, the device of the invention includes a metal member present in any region of the main body. In this way, in the event that the user inadvertently swallows the device, it is possible to detect, for example, by means of X-rays, the location of the device inside the user's body given the presence of a detectable metal member. Thus, a health worker can decide whether or not there is a risk to the user.

Advantageously, the main body is made from a single piece of injection-mouldable material, which makes it easier to manufacture it and consequently reduces production costs.

The described oral hygiene device therefore represents an innovative structure with structural and constitutional features hitherto unknown for its intended purpose, reasons which, taken together with its usefulness, provide it with sufficient grounds for obtaining the requested exclusivity privilege.

Other features and advantages of the oral hygiene device object of the present invention will be apparent from the description of a preferred, but not exclusive, embodiment, which is illustrated by way of non-limiting example in the accompanying drawings, in which:

### BRIEF DESCRIPTION OF THE DRAWINGS

Figure 1 is a schematic perspective view of a first embodiment of the oral hygiene device which is not a part of the invention;
Figure 2 is a schematic view of the device represented in Figure 1 arranged inside the mouth of a user;
Figure 3 is a side elevation view of a second embodiment of a device which is not a part of the invention;
Figure 4 is a perspective view of a third embodiment of an oral hygiene device which is not a part of the present invention;
Figure 5 is a plan view of the device represented in Figure 4;
Figure 6 is a cross-sectional view of the support along the cut line A-A indicated in Figure 5;
Figure 7 is a perspective view of a fourth embodiment of the oral hygiene device according to the present invention; and
Figure 8 is an exploded perspective view of a fifth embodiment of the device according to the invention.

### DESCRIPTION OF A PREFERRED EMBODIMENT

In view of the mentioned drawings and according to the numbering used, the figures show a preferred embodiment of the invention, which comprises the parts and elements indicated and described in detail below.

### Example 1

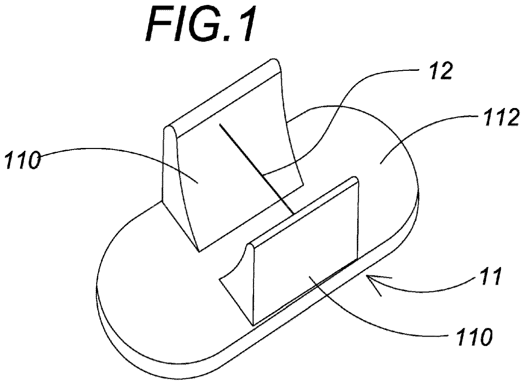

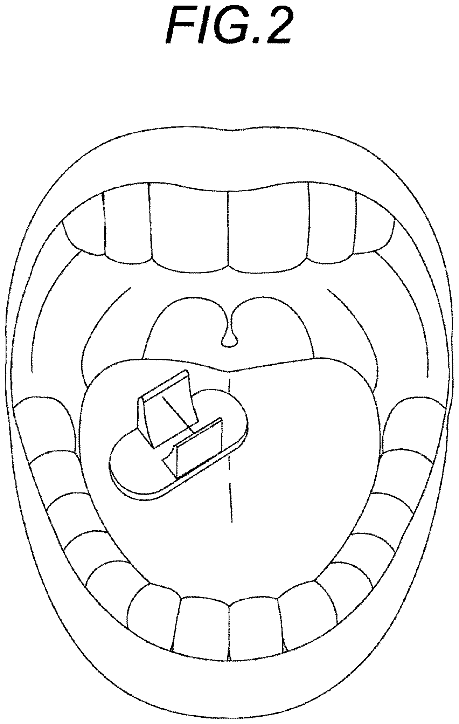

In this embodiment of a device which is not a part of the invention, as represented in Figures 1 to 3, it comprises a main body (11) that has two support regions (110) spaced apart, which are configured to support and hold the ends of a piece of dental floss (12), the main body (11) having dimensions such that the support is capable of being inserted inside the mouth area of a user. As can be seen, it includes a section with a flat surface (112), which makes it easier to clean the teeth located in the rearmost portion of the oral region as the molars act as a support area. The dental floss in this case defines a single cleaning zone defined by a segment of dental floss (12) arranged between the two protruding projections or support regions (110) facing and separated from each other.

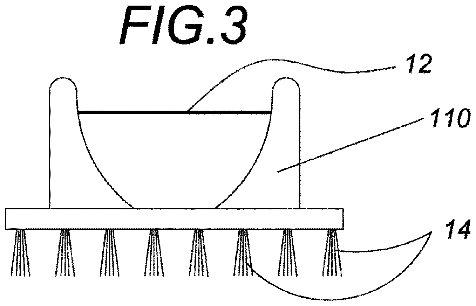

In Figure 3, the device of the invention can additionally include a plurality of bristles (14) that protrude externally from the flat surface (112), which enable the dental area on which the body (11) rests to be cleaned simultaneously while the dental floss (12) is being used to clean other teeth.

### Example 2

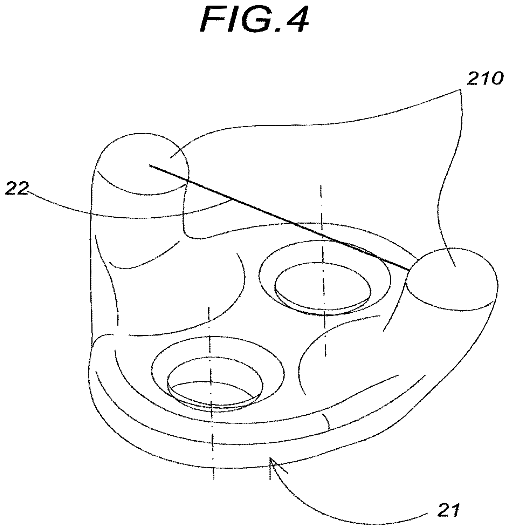

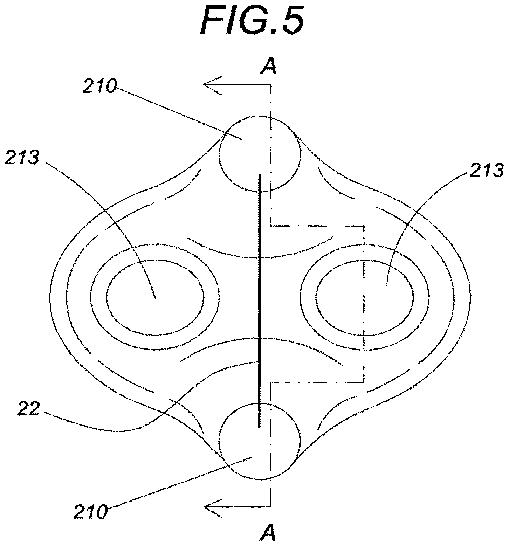

As can be seen in a embodiment of the oral hygiene device, which is not a part of the invention, shown in Figures 4 and 5, it comprises a main body (21) that has two regions (210) spaced apart, which are configured to support and hold the ends of a piece of dental floss (22), the main body (21) having dimensions such that the support is capable of being inserted inside the mouth area of a user.

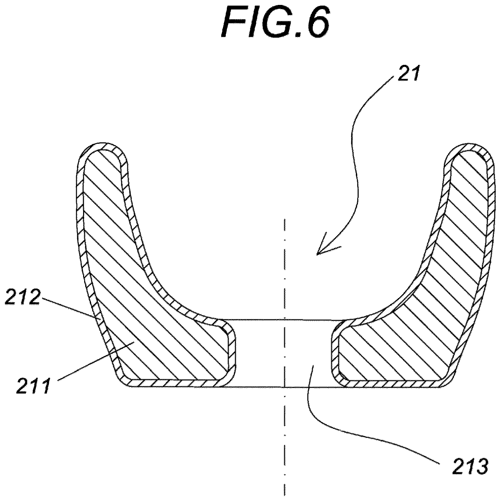

As can be seen in Figure 6, the main body (21) is formed from a core (211) made of edible chewable gum base material (for example, of those used for manufacturing chewing gum for oral hygiene), being able to contain antimicrobial, antitartar or anti-plaque agents, the core (211) being coated with a hard thin outer layer (212), also made of an edible material (which can be crunchy).

Furthermore, the core (211) of the main body (21) has a flavouring or colouring and/or active ingredient, such as, for example, of the pharmaceutical, medicinal, nutritional or functional type, a toothpaste or breath freshener.

This device, therefore, also contributes to reducing the formation of cavities and gum disease, since it reduces the layer of bacteria that adheres to the surface of the teeth due to the composition of the core.

Furthermore, the main body (21) is made up of a flat region from which a pair of separate extensions protrude from one same surface, each one corresponding to a respective region (210) to hold the section of dental floss (22), as mentioned above.

It should be noted that the main body (21) additionally includes a pair of through holes (213) and it is not provided with sharp edges, such that it does not pose any risk to the user while it is being used.

### Example 3

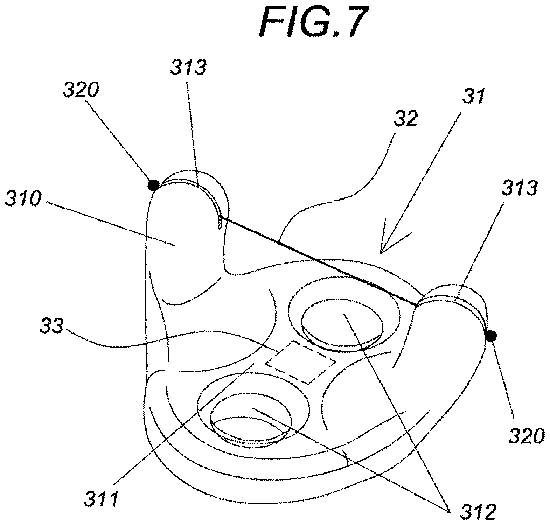

As can be seen in Figure 7, the oral hygiene device comprises a main body (31), made from a single piece of injection-mouldable material, that has two support regions (310) spaced apart, which are configured to support and hold the ends of a piece of dental floss (32), the body having dimensions such that the support is capable of being inserted inside the mouth area of a user.

As can be seen, the main body (31) is made up of a flat region (311) from which a pair of separate extensions protrude from one same surface, each one corresponding to a support region (310) to hold a section of dental floss (32), the extensions of which protrude perpendicular relative to the flat region (311).

Each of the support regions (310) includes a releasable coupling system envisaged to keep the dental floss (32) fixed in a condition of use and envisaged to remove the dental floss (32) relative to the support region.

Going into greater detail, the releasable coupling system has a single groove (313) that crosses the entire width of the support region made in the top of the support region (310), the groove (313) having a width such that the dental floss is press-fit, the ends of the dental floss (32) including a widened portion (320) or additional member that has a greater thickness or diameter than the dental floss (32), envisaged to ensure that the dental floss (32) does not easily release from the groove (313).

It should be noted that the main body (31) additionally includes a pair of through holes (312) and it is not provided with sharp edges, such that it does not pose any risk to the user while it is being used inside the mouth or if it is inadvertently swallowed by said user.

Additionally, the main body can include a metal member (33) (represented by dashed lines) present in any area thereof, preferably housed inside the main body (31), which enables it to be detected by suitable metal detection means, such as, for example, a conventional X-ray device commonly used in the medical field. This metal member (33) can be inserted inside during the manufacturing process, for example, by means of the injection overmoulding technique.

### Example 4

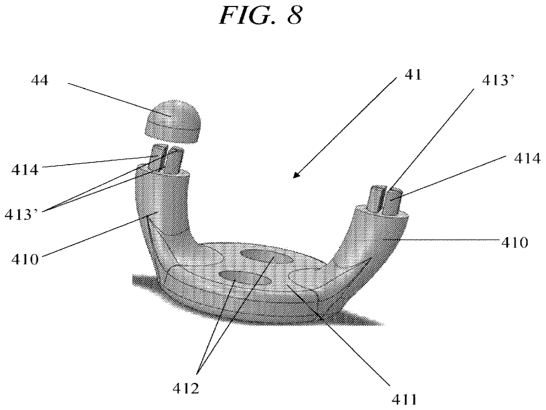

Figure 8 shows a fourth exemplary embodiment of the oral hygiene device. The main difference in this second embodiment is that the releasable coupling system for the dental floss (42) has multiple grooves (413') that adopt a cross-shaped arrangement made in a protruding extension (414) that protrudes from the top of each support region (410).

Additionally, in this fourth example, the device can include a protective cap (44) that can be coupled by snap fit at the top of each support region (410) that forms part of the main body (41).

The main body (41) additionally includes a pair of through holes (412) located in the flat region (411) and it is not provided with sharp edges, such that it does not pose any risk to the user while it is being used inside the mouth or if it is inadvertently swallowed by said user.

The details, shapes, dimensions and other accessory elements used to manufacture the oral hygiene device of the invention may be suitably substituted for others which do not diverge from the scope defined by the claims included below.

## Claims

1. An oral hygiene device, consisting of a main body not provided with a region forming a handle, with dimensions that allow the device to be completely inserted into the mouth area of a user, said main body (11, 21, 31, 41) supporting at least one piece of dental floss (12, 22, 32, 42), where said piece of floss (12, 22, 32, 42) defines at least one cleaning zone, the main body (11, 21, 31, 41) having two separate support regions (210, 310, 410) each configured to support the ends of a piece of floss (12, 22, 32, 42), in the form of protruding projections that extend away from a central portion (211, 311, 411), wherein the support regions (210, 310, 410) protrude perpendicular relative to the central portion (211, 311, 411) and have a termination with a curved shape, wherein the two support regions (210, 310, 410) are provided with a releasable coupling system (313, 412', 414) envisaged to keep the dental floss (12, 22, 32, 42) fixed in a condition of use and envisaged to remove the dental floss from the support regions (210, 310, 410),
and wherein the main body (11, 21, 31, 41) is made from a single piece,
**characterised in that** the central portion (211, 311, 411) has a flat surface that includes a pair of through holes (312, 412).

2. The oral hygiene device according to claim 1, **characterised in that** the main body (11, 21, 31, 41) is made of an injection-mouldable material.

3. The oral hygiene device according to any of the preceding claims, **characterised in that** it includes a plurality of bristles that protrude externally from the flat surface.

4. The oral hygiene device according to claim 1, **characterised in that** the main body (11, 21, 31, 41) is formed from a core made of an edible material, the core being coated with a hard thin layer of edible material.

5. The oral hygiene device according to claim 4, **characterised in that** the core is made of chewable gum base material.

6. The oral hygiene device according to claim 4, **characterised in that** the core of the main body (11, 21, 31, 41) contains an active ingredient.

7. The oral hygiene device according to claim 6, **characterised in that** the active ingredient is of the pharmaceutical, medicinal, nutritional or functional type, a toothpaste or breath freshener.

8. The oral hygiene device according to claim 1, **characterised in that** the releasable coupling system has a groove made in the top of the support region, the groove having a width such that the dental floss is press-fit, the ends of the floss including a widened portion.

9. The oral hygiene device according to claim 1, **characterised in that** the releasable coupling system has a plurality of grooves arranged in a cross shape made in a projecting extension that protrudes from the top of each support region.

10. The oral hygiene device according to any of preceding claims 1 to 9, **characterised in that** it includes a metal member (33) housed inside of the main body (11, 21, 31, 41).

## Patentansprüche

1. Mundpflegevorrichtung, bestehend aus einem Hauptkörper, der nicht mit einem einen Griff bildenden Bereich versehen ist, mit Abmessungen, die es ermöglichen, dass die Vorrichtung vollständig in den Mundbereich eines Benutzers eingeführt werden kann, wobei der Hauptkörper (11, 21, 31, 41) mindestens ein Stück Zahnseide (12, 22, 32, 42) trägt, wobei das Stück Zahnseide (12, 22, 32, 42) mindestens eine Reinigungszone definiert, wobei der Hauptkörper (11, 21, 31, 41) zwei separate Trägerbereiche (210, 310, 410) aufweist, die jeweils dazu konfiguriert sind, die Enden eines Stücks Zahnseide (12, 22, 32, 42) zu tragen, in der Form von hervorstehenden Vorsprüngen, die sich von einem Mittelabschnitt (211, 311, 411) weg erstrecken, wobei die Trägerbereiche (210, 310, 410) senkrecht in Bezug auf den Mittelabschnitt (211, 311, 411) hervorstehen und einen Abschluss mit einer gekrümmten Form aufweisen, wobei die zwei Trägerbereiche (210, 310, 410) mit einem lösbaren Kopplungssystem (313, 412', 414) versehen sind, das dazu vorgesehen ist, die Zahnseide (12, 22, 32, 42) in einem Zustand der Verwendung fixiert zu halten, und dazu vorgesehen ist, die Zahnseide von den Trägerbereichen (210, 310, 410) zu entfernen,
und wobei der Hauptkörper (11, 21, 31, 41) aus einem einzigen Teil hergestellt ist,
**dadurch gekennzeichnet, dass** der Mittelabschnitt (211, 311, 411) eine flache Oberfläche aufweist, die ein Paar Durchlassbohrungen (312, 412) einschließt.

2. Mundpflegevorrichtung gemäß Anspruch 1, **dadurch gekennzeichnet, dass** der Hauptkörper (11, 21, 31, 41) aus einem spritzgießfähigen Material hergestellt ist.

3. Mundpflegevorrichtung gemäß einem der vorhergehenden Ansprüche, **dadurch gekennzeichnet, dass** sie eine Vielzahl von Borsten einschließt, die extern von der flachen Oberfläche hervorstehen.

4. Mundpflegevorrichtung gemäß Anspruch 1, **dadurch gekennzeichnet, dass** der Hauptkörper (11, 21, 31, 41) aus einem Kern gebildet ist, der aus einem essbaren Material hergestellt ist, wobei der Kern mit einer harten dünnen Schicht aus essbarem Material beschichtet ist.

5. Mundpflegevorrichtung gemäß Anspruch 4, **dadurch gekennzeichnet, dass** der Kern aus Kaugummi-Basismaterial hergestellt ist.

6. Mundpflegevorrichtung gemäß Anspruch 4, **dadurch gekennzeichnet, dass** der Kern des Hauptkörpers (11, 21, 31, 41) einen Wirkstoff enthält.

7. Mundpflegevorrichtung gemäß Anspruch 6, **dadurch gekennzeichnet, dass** der Wirkstoff vom pharmazeutischen, medizinischen, ernährungsbezogenen oder funktionellen Typ, eine Zahnpasta oder ein Atemerfrischer ist.

8. Mundpflegevorrichtung gemäß Anspruch 1, **dadurch gekennzeichnet, dass** das lösbare Kopplungssystem eine Nut aufweist, die in der Oberseite des Trägerbereichs eingearbeitet ist, wobei die Nut eine solche Breite aufweist, dass die Zahnseide pressgepasst ist, wobei die Enden der Zahnseide einen verbreiterten Abschnitt einschließen.

9. Mundpflegevorrichtung gemäß Anspruch 1, **dadurch gekennzeichnet, dass** das lösbare Kopplungssystem eine Vielzahl von kreuzförmig angeordneten Nuten aufweist, die in einer vorspringenden Verlängerung eingearbeitet sind, die von der Oberseite jedes Trägerbereichs hervorsteht.

10. Mundpflegevorrichtung gemäß einem der vorhergehenden Ansprüche 1 bis 9, **dadurch gekennzeichnet, dass** sie ein Metallelement (33) einschließt, das im Inneren des Hauptkörpers (11, 21, 31, 41) aufgenommen ist.

## Revendications

1. Dispositif d'hygiène bucco-dentaire, constitué d'un corps principal non pourvu d'une région formant une poignée, avec des dimensions qui permettent d'insérer complètement le dispositif dans la zone de la bouche d'un utilisateur, ledit corps principal (11, 21, 31, 41) supportant au moins un morceau de fil dentaire (12, 22, 32, 42), où ledit morceau de fil dentaire (12, 22, 32, 42) définit au moins une zone de nettoyage, le corps principal (11, 21, 31, 41) ayant deux régions de support (210, 310, 410) séparées configurées chacune pour supporter les extrémités d'un morceau de fil dentaire (12, 22, 32, 42), sous la forme de projections saillantes qui s'étendent à distance d'une partie centrale (211, 311, 411), dans lequel les régions de support (210, 310, 410) font saillie perpendiculairement par rapport à la partie centrale (211, 311, 411) et ont une terminaison de forme incurvée, dans lequel les deux régions de support (210, 310, 410) sont pourvues d'un système d'accouplement amovible (313, 412', 414) prévu pour maintenir le fil dentaire (12, 22, 32, 42) fixé dans une condition d'utilisation et prévu pour retirer le fil dentaire des régions de support (210, 310, 410),
et dans lequel le corps principal (11, 21, 31, 41) est fabriqué à partir d'un seul morceau,
**caractérisé en ce que** la partie centrale (211, 311, 411) a une surface plane qui comporte une paire de trous traversants (312, 412).

2. Dispositif d'hygiène bucco-dentaire selon la revendication 1, **caractérisé en ce que** le corps principal (11, 21, 31, 41) est fabriqué en un matériau pouvant être moulé par injection.

3. Dispositif d'hygiène bucco-dentaire selon l'une quelconque des revendications précédentes, **caractérisé en ce qu'**il comporte une pluralité de poils qui font saillie vers l'extérieur à partir de la surface plane.

4. Dispositif d'hygiène bucco-dentaire selon la revendication 1, **caractérisé en ce que** le corps principal (11, 21, 31, 41) est formé d'un noyau constitué d'une matière comestible, le noyau étant recouvert d'une fine couche dure de matière comestible.

5. Dispositif d'hygiène bucco-dentaire selon la revendication 4, **caractérisé en ce que** le noyau est constitué d'une matière de base de gomme à mâcher.

6. Dispositif d'hygiène bucco-dentaire selon la revendication 4, **caractérisé en ce que** le noyau du corps principal (11, 21, 31, 41) contient un principe actif.

7. Dispositif d'hygiène bucco-dentaire selon la revendication 6, **caractérisé en ce que** le principe actif est de type pharmaceutique, médical, nutritionnel ou fonctionnel, un dentifrice ou un rafraîchisseur d'haleine.

8. Dispositif d'hygiène bucco-dentaire selon la revendication 1, **caractérisé en ce que** le système d'accouplement libérable a une rainure fabriquée dans la partie supérieure de la zone de support, la rainure ayant une largeur de telle sorte que le fil dentaire est ajusté par pression, les extrémités du fil comportant une partie élargie.

9. Dispositif d'hygiène bucco-dentaire selon la revendication 1, **caractérisé en ce que** le système d'accouplement libérable a une pluralité de rainures agencées en forme de croix fabriquées dans une extension saillante qui fait saillie depuis le haut de chaque région de support.

10. Dispositif d'hygiène bucco-dentaire selon l'une quelconque des revendications précédentes 1 à 9, **caractérisé en ce qu'**il comporte un élément métallique (33) logé à l'intérieur du corps principal (11, 21, 31, 41).
